# EUROPÄISCHE PATENTSCHRIFT

(11) **EP 0 429 969 B1**
(45) Veröffentlichungstag und Bekanntmachung des Hinweises auf die Patenterteilung: **31.03.1993**
(21) Anmeldenummer: 90121852.9
(22) Anmeldetag: 15.11.1990
(51) Int. Cl.: A23G 1/22

(54) **Schokoladeform aus Kunststoff**
Chocolate mould made of plastic
Moule à chocolat en matière plastique

(30) Priorität: 27.11.1989 DE 3939143
(43) Veröffentlichungstag der Anmeldung: 05.06.1991
(73) Patentinhaber: Kaupert, Günther, Dr.-Ing., D-57339 Erndtebrück (DE)
(72) Erfinder: Kaupert, Günther, Dr. Ing., W-5927 Erndtebrück (DE); Sturm-Kaupert, Ernst-Rudolf, W-5927 Erndtebrück (DE)
(74) Vertreter: Gottlob, Peter, Dipl. Ing.

(56) Entgegenhaltungen:
- EP-A- 0 278 575
- WO-A-88/08946
- BE-A- 813 249
- GB-A- 2 048 756
- NL-A- 6 407 514
- US-A- 2 166 568
- US-A- 2 939 299
- US-A- 3 233 562
- US-A- 4 335 147

## Beschreibung

Die Erfindung betrifft Schokoladenformen aus Kunststoff gemäß dem Oberbegriff von Patentanspruch 1.

Aus der DE-PS 1 283 661 ist eine metallisch verstärkte Schokoladenform aus Kunststoff bekannt, bei der die aus Kunststoff bestehenden Formteile eingepreßte oder eingeprägte Formvertiefungen zur Aufnahme der zu formenden Schokolade aufweisen. Die Formteile einschließlich Formvertiefungen haben etwa gleiche Wandstärken, die so bemessen werden können, daß eine einwandfreie Kühlung beim Durchlauf durch eine Kühlanlage sichergestellt ist.

Aus der DE-OS 18 06 244 ist eine Gießform aus Kunststoff bekannt in Gestalt einer dünnwandigen Wanne mit als Unterteilungen dienenden hohlen Längs- oder Querstegen. Dabei ist die Wanddicke in den einzelnen Teilen der Form unterschiedlich, wobei das Unterteil der Wanne die geringste Wandstärke aufweist, während der obere Randteil die größte Wandstärke besitzt. Eine gattungsgemäße Form aus flexiblem Material, die zahlreiche Gießformen besitzt, ist ferner aus der DE-OS 29 14 543 bekannt. Dabei sind die Gießformen durch Stege in Gießabschnitte unterteilt, wobei deren Seiten- und Stirnwände höher sind als die Stege. Die sich hierbei ergebenden, zur mechanischen Verstärkung dienenden oder fertigungsbedingten Wanddickenunterschiede der Form haben jedoch keinen nennenswerten oder gar gezielten Einfluß auf den Erstarrungsprozeß der schmelzflüssig eingefüllten Schokoladenmasse, zumal die Wärmeabfuhr in einer Kühlkammer primär über die freie Oberfläche der Schokoladenmasse erfolgt.

Demgegenüber haben die herzustellenden Schokoladenteile wie Tafeln, Reliefs, Pralinen, Hohlfiguren etc. mitunter stark variable Querschnittsformen, bei denen sich massive, dickwandige Bereiche mit relativ dünnen Stellen abwechseln. Dabei erstarren unter ansonsten gleichen Kühlbedingungen zunächst die dünneren Stellen und sodann die massiveren Querschnittsbereiche der Schokoladenteile; die erforderliche Gesamtkühlzeit wird somit im wesentlichen von den massiveren Querschnittsbereichen bestimmt. Dieser zeitlich und örtlich inhomogene Erstarrungsvorgang kann zu einer unerwünschten Fleckenbildung auf der Oberfläche der Schokoladenteile sowie zu erhöhtem Bruchanfall beim Ausformen führen.

Die Erfindung hat zur Aufgabe, eine gattungsgemäße Schokoladenform aus Kunststoff so zu verbessern, daß damit die Fleckenbildung auf der Schokoladenoberfläche vermieden, der Bruchanfall beim Ausformen weitgehend beseitigt und darüberhinaus die erforderliche Gesamtkühlzeit für die Schokoladenformteile vermindert werden.

Diese Aufgabe wird mit den kennzeichnenden Merkmalen des Patentanspruchs 1 gelöst. Die hierauf bezogenen Unteransprüche beinhalten vorteilhafte Ausgestaltungen und Weiterbildungen dieser Lösung. Mit der Erfindung wird der Erstarrungsprozeß im Zuge des Kühlens der kanalförmig ausgebildeten Unterseite der Kunststoffform mit den in den Alveolen enthaltenen, zunächst schmelzflüssigen Schokoladeteilen homogenisiert; massive Bereiche und dünne Stellen erstarren etwa gleichzeitig, was zu einer gleichmäßig glänzenden Oberfläche der Schokoladenteile führt. Darüber hinaus wird durch die erfindungsgemäßen Maßnahmen auch die Bruchneigung beim Ausformen erheblich gemindert. Durch entsprechende Optimierung der unter schiedlichen Wanddicken der dem Kühlluftstrom ausgesetzten Alveolen kann die Kühlzeit verkürzt und der hiermit verbundene Energieaufwand vermindert werden.

Ein Ausführungsbeispiel der Erfindung wird im folgenden anhand der Zeichnungen erläutert:
- Die Figur 1: zeigt die Draufsicht auf eine mittels Spritzgießen hergestellte Kunststoff-Schokoladenform zur Herstellung sogenannter "Napolitains" in Gestalt rechteckiger Täfelchen;
- die Figur 2: zeigt einen Querschnitt der Figur 1 entlang der Schnittlinie A - B.

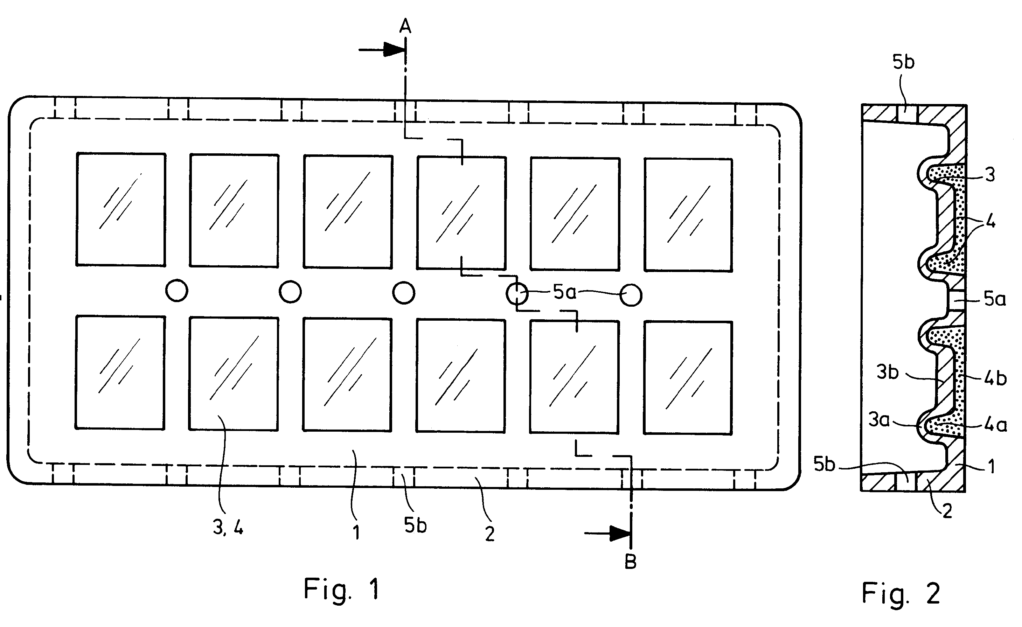

Die Form besteht aus einem plattenförmigen Gebilde 1 und einem umlaufenden Rahmen 2. Die Platte 1 weist zwei parallele Reihen von in der Draufsicht rechteckigen Alveolen 3 auf, die mit Schokoladenmasse 4 gefüllt sind. Wie aus Figur 2 zu ersehen ist, haben die Alveolen 3 je eine umlaufende, rinnenförmige Vertiefung und eine dieser gegenüber erhabene, mittlere Zone. Dadurch entsteht ein Schokoladenteil mit einem massiven, wulstförmigen Rand 4 a und einem dünnwandigen Mittelteil 4 b. Die die rinnenförmige Vertiefung bildende Wandung 3 a der Alveole 3 ist um das 1,5 bis 3-fache dünner bemessen als die Wandung 3 b, die an den dünnwandigeren Mittelteil 4 b des Schokaldenteils 4 angrenzt. Dadurch wird die Wärmeabfuhr aus dem wulstförmigen Rand 4 a an einen die Unterseite der Form durchströmenden Kühlluftstrom so verbessert, daß dieser Rand 4 a und das Mitteilteil 4 b der zunächst schmelzflüssigen Masse 4 etwa gleichzeitig erstarren.

Zur Verhinderung von Stauungen des Kühlluftstroms sind in der Platte 1 und dem Rahmen 2 Löcher 5 a und 5 b vorgesehen, durch die ein Teil der erwärmten Luft entweichen kann, wodurch der Kühlungsprozeß zusätzlich beschleunigt wird.

Der Rahmen 2 und der plattenförmige Teil 1, die eine Art Kanal zur Führung des Kühlluftstromes bilden, sind im Verhältnis zu den Wandungen 3 a, 3 b der Alveolen 3 dickwandiger ausgeführt. Die erfindungsgemäßen Formen können Abmessungen bis zu 1800 mm Länge, 400 mm Breite und 30 mm Höhe erreichen. Sofern sie auf der Unterseite mit zusätzlichen Versteifungsrippen versehen sind, werden auch diese Rippen mit Lochungen (nicht dargestellt) versehen.

Die Erfindung ist nicht auf das dargestellte Beispiel beschränkt, sondern auch für anderen Formen gemäß der Ansprüche 1-3 anwendbar, mit denen Schokoladenteile unterschiedlicher Querschnittsform hergestellt werden sollen. Auch in diesen Fällen ist der Wandungsteil der Alveole, der mit einer geringeren Menge an Schokoladenmasse pro Flächeneinheit belegt ist dicker bemessen als der Wandungsteil mit der höheren Flächenbelegung.

## Patentansprüche

1. Kühlbare Schokoladenform aus Kunststoff mit einem plattenförmigen Teil, das Alveolen zur Aufnahme zu formender Schokoladenteile variabler Querschnittsform aufweist und von einem Rahmen umschlossen ist, wobei die Wandungen der Alveolen unterschiedliche Wanddicken aufweisen, dadurch gekennzeichnet, daß
a) das plattenförmige Teil (1) und der Rahmen (2) kanalartig zur Führung eines die Unterseite der Form durchströmenden Kühlluftstroms ausgebildet sind und daß
b) im Sinne eines homogenen Erstarrens der zunächst schmelzflüssigen Schokoladenmasse durch den Kühlluftstrom die Wandung (3a) der Alveole (3), die an einen massiveren Bereich (4a) der zu formenden Schokoladenteile (4) angrenzt, dünnwandiger gestaltet ist als die Wandung (3b) der Alveole (3), die mit einer geringeren Menge (4b) an Schokoladenmasse pro Flächeneinheit belegt ist.

2. Schokoladenform nach Anspruch 1, dadurch gekennzeichnet, daß sich die Wandungen (3a und 3b) um das 1,5 bis 3-fache in ihrer Wanddicke unterscheiden.

3. Schokoladenform nach Anspruch 1, dadurch gekennzeichnet, daß das plattenförmige Teil (1) und der Rahmen (2) Durchbrüche (5a, 5b) für den Durchtritt der Kühlluft aufweisen.

## Claims

1. Coolable chocolate mould formed from plastics material, comprising a tray-like member, which has cavities for the accommodation of pieces of chocolate which are to be shaped and are of variable cross-sectional form, and said tray-like member is surrounded by a frame, the walls of the cavities having different wall thicknesses, characterised in that
a) the tray-like member (1) and the frame (2) have a duct-like configuration for the guidance of a stream of cooling air flowing through the underside of the mould, and in that
b) in order to achieve a homogeneous setting of the mass of chocolate, which is initially molten, by utilising the stream of cooling air, the wall (3a) of the cavities (3) abutting against a more solid portion (4a) of the pieces of chocolate (4) which are to be shaped is thinner than the wall (3b) of the cavities (3) covered with a smaller quantity (4b) of chocolate mass per unit area.

2. Chocolate mould according to claim 1, characterised in that the walls (3a and 3b) differ in respect of their wall thickness by 1.5 to 3 times.

3. Chocolate mould according to claim 1, characterised in that the tray-like member (1) and the frame (2) have openings (5a, 5b) through which the cooling air can pass.

## Revendications

1. Moule à chocolat en matière plastique destiné à être refroidi, comportant une partie en forme de plaque qui présente des alvéoles de moulage de section variable pour la réception des pièces de chocolat à mouler et qui est entourée d'un cadre, les parois des alvéoles présentant des épaisseurs de parois différentes, caractérisé en ce que
1) la partie en forme de plaque (1) et le cadre (2) sont formés comme des canaux afin de diriger un courant d'air de refroidissement qui baigne la surface inférieure du moule, et
2) en vue d'un durcissement homogène de la masse de chocolat initialement en fusion, au moyen du courant d'air de refroidissement, les parois (3a) des alvéoles (2), qui bordent une zone massive (4a) des pièces de chocolat à mouler, sont prévues plus minces que les parois (3b) des alvéoles (3) qui ne sont recouvertes que d'une petite quantité (4b) de chocolat par unité de surface.

2. Moule à chocolat selon la revendication 1, caractérisé en ce que les parois (3a et 3b) diffèrent en épaisseur dans un rapport de 1,5 à 3 fois.

3. Moule à chocolat selon la revendication 1, caractérisé en ce que la partie en forme de plaque (1) et le cadre (2) présentent des ouvertures traversantes (5a,5b) pour faire pénétrer l'air de refroidissement.
